(19) Europäisches Patentamt
European Patent Office
Office européen des brevets

(11) **EP 4 261 238 A1**

(12) **EUROPEAN PATENT APPLICATION**
published in accordance with Art. 153(4) EPC


(43) Date of publication:
**18.10.2023 Bulletin 2023/42**

(21) Application number: **21903741.3**

(22) Date of filing: **02.12.2021**

(51) International Patent Classification (IPC):
***C08F 210/16*** *(2006.01)* ***C08F 210/14*** *(2006.01)*
***C08F 2/34*** *(2006.01)* ***C08F 4/659*** *(2006.01)*
***C08F 4/6592*** *(2006.01)* ***C08F 4/02*** *(2006.01)*
***C07F 17/00*** *(2006.01)*

(52) Cooperative Patent Classification (CPC):
**C07C 11/04; C07C 11/107; C07F 7/00; C07F 17/00; C08F 2/34; C08F 4/02; C08F 4/659; C08F 4/6592; C08F 210/14; C08F 210/16**

(86) International application number:
**PCT/KR2021/018086**

(87) International publication number:
**WO 2022/124695 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2020 KR 20200170328**



(71) Applicant: **Hanwha Solutions Corporation**
**Jung-gu**
**Seoul 04541 (KR)**

(72) Inventors:
- **JO, Jisong**
  **Daejeon 34128 (KR)**
- **PARK, Jeong Hyun**
  **Daejeon 34128 (KR)**
- **KIM, Sung Dong**
  **Daejeon 34128 (KR)**
- **LEE, Munhee**
  **Daejeon 34128 (KR)**
- **JOUNG, Ui Gap**
  **Daejeon 34128 (KR)**

(74) Representative: **Berggren Oy**
**P.O. Box 16**
**Eteläinen Rautatiekatu 10A**
**00101 Helsinki (FI)**


(54) **OLEFIN POLYMER AND PREPARATION METHOD THEREFOR**


(57) The present invention relates to an olefin polymer and a preparation method therefor. The olefin polymer according to an embodiment of the present invention has a high melting point and a high crystallization temperature, thus having excellent heat resistance of resin. Therefore, the olefin polymer according to an embodiment of the present invention may be utilized in spout pouches for high-temperature liquid containers, or the like


FIG. 1

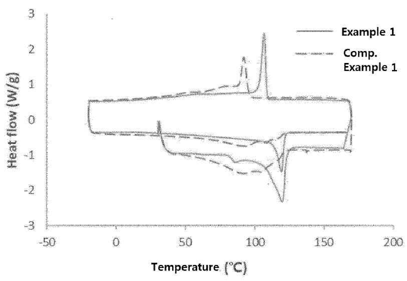


EP 4 261 238 A1

## Description

[Technical Field]

The present invention relates to an olefinic polymer and a preparation method therefor. More specifically, the present invention relates to an olefinic polymer having excellent heat resistance and a preparation method therefore.

[Background Art]

A metallocene catalyst, which is one of the catalysts used in the polymerization of olefins, is a compound in which a ligand such as cyclopentadienyl, indenyl, and cycloheptadienyl is coordinated to a transition metal or a transition metal halide compound, and has a sandwich structure in its basic form.

In a Ziegler-Natta catalyst, which is another catalyst used in the polymerization of olefins, the metal component serving as the active sites is dispersed on an inert solid surface, whereby the properties of the active sites are not uniform. On the other hand, since a metallocene catalyst is a single compound having a specific structure, it is known as a single-site catalyst in which all active sites have the same polymerization characteristics. A polymer polymerized by such a metallocene catalyst is characterized by a narrow molecular weight distribution, a uniform distribution of comonomers, and a higher copolymerization activity than Ziegler-Natta catalysts.

Meanwhile, a linear low-density polyethylene (LLDPE) is produced by copolymerizing ethylene and an alpha-olefin at a low pressure using a polymerization catalyst. It has a narrow molecular weight distribution and short chain branches (SCBs) having a certain length, but generally does not have long chain branches (LCBs). Films manufactured from a linear low-density polyethylene have high strength at breakage, elongation, tear strength, and impact strength in addition to the characteristics of common polyethylene. They are widely used for stretch films and overlap films to which conventional low-density polyethylene or high-density polyethylene is hardly applicable.

However, in order to utilize the olefinic polymer prepared by the metallocene catalyst for spout pouches for high-temperature liquid containers, excellent heat resistance is required.

[Disclosure]

[Technical Problem]

An object of the present invention is to provide an olefinic polymer having excellent heat resistance.

Another object of the present invention is to provide a method for preparing the olefinic polymer.

[Technical Solution]

In one general aspect, there is provided an olefinic polymer that has a density of 0.9 to 0.95 g/cm3, preferably 0.91 to 0.945 g/cm3, and satisfies the following Equations 1a and 2a:

[Equation 1a]

$$224.02 \times d - 86.257 < Tm$$

[Equation 2a]

$$219.64 \times d - 95.767 < Tc$$

wherein Tm is a melting temperature (°C), Tc is a crystallization temperature (°C), and d is a density (g/cm$^3$) of the olefinic polymer.

In an embodiment of the present invention, the olefinic polymer satisfies the following Equations 1b and 2b:

[Equation 1b]

$$Tm < 224.02 \times d - 82.257$$

[Equation 2b]

$$Tc < 219.64 \times d - 91.767$$

In an embodiment of the present invention, the olefinic polymer may have (1) a density of 0.918 to 0.945 g/cm$^3$; (2) a melt index ($I_{2.16}$) of 0.1 to 5.0 g/10 min under a load of 2.16 kg, when measured at 190°C; (3) a melt flow ratio (MFR) of 17 or more, when measured at 190°C, as a ratio of the melt index ($I_{21.6}$) under a load of 21.6 kg to the melt index ($I_{2.16}$) under a load of 2.16 kg; (4) a melting temperature of 120°C or more; and (5) a crystallization temperature of 107°C or more.

In an embodiment of the present invention, the olefinic polymer may be prepared by polymerizing an olefinic monomer in the presence of a hybrid catalyst comprising at least one first transition metal compound represented by the following Formula 1; and at least one second transition metal compound selected from a compound represented by the following Formula 2 and a compound represented by the following Formula 3:

[Formula 1]

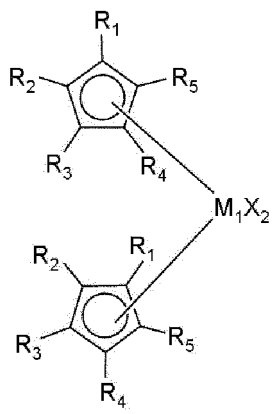

[Formula 2]

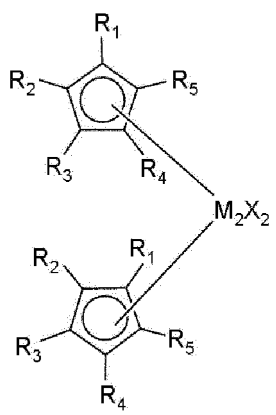

[Formula 3]

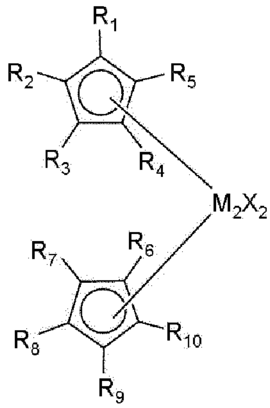

wherein $M_1$ and $M_2$ are different from each other and are each independently titanium (Ti), zirconium (Zr), or hafnium (Hf),

X is each independently halogen, C $_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, or $C_{1-20}$ alkylamido, and

$R_1$ to $R_{10}$ are each independently hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, provided that $R_1$ to $R_{10}$ are each independently capable of being linked to adjacent groups to form a substituted or unsubstituted saturated or unsaturated $C_{4-20}$ ring.

In an embodiment of the present invention, $M_1$ and $M_2$ are different from each other and may each be zirconium or hafnium, each X may be halogen or $C_{1-20}$ alkyl, and $R_1$ to $R_{10}$ may each be hydrogen, substituted or unsubstituted $C_{1-20}$ alkyl, substituted or unsubstituted $C_{1-20}$ alkenyl, or substituted or unsubstituted $C_{6-20}$ aryl.

In a preferred embodiment of the present invention, $M_1$ may be hafnium, $M_2$ may be zirconium, and X may be chlorine or methyl.

In a preferred embodiment of the present invention, the first transition metal compound may be at least one of the transition metal compounds represented by the following Formulas 1-1 and 1-2, and the second transition metal compound may be at least one of transition metal compounds represented by the following Formulas 2-1, 2-2, and 3-1:

[Formula 1-1] [Formula 1-2]

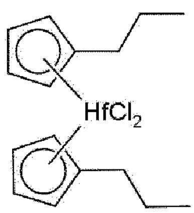

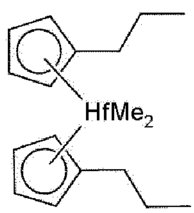

[Formula 2-1] [Formula 2-2] [Formula 3-1]

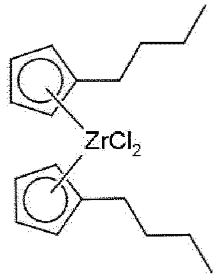 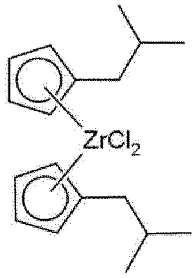 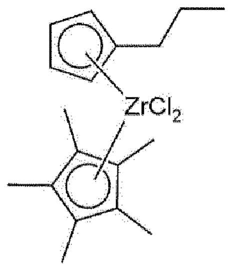

wherein Me is a methyl group.

In an embodiment of the present invention, a molar ratio of the first transition metal compound to the second transition metal compound is in a range of 100:1 to 1:100.

In an embodiment of the present invention, the catalyst may comprise at least one cocatalyst selected from the group consisting of a compound represented by the following Formula 4, a compound represented by the following Formula 5, and a compound represented by the following Formula 6:

[Formula 4]

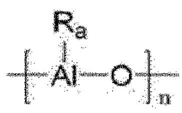

[Formula 5]

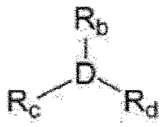

[Formula 6] $[L\text{-}H]^+[Z(A)_4]^-$ or $[L]^+[Z(A)_4]^-$

in Formula 4, n is an integer of 2 or more, and $R_a$ is a halogen atom, a $C_{1-20}$ hydrocarbon group, or $C_{1-20}$ hydrocarbon group substituted with halogen,

in Formula 5, D is aluminum (Al) or boron (B), and $R_b$, $R_c$, and $R_d$ are each independently a halogen atom, a $C_{1-20}$ hydrocarbon group, a $C_{1-20}$ hydrocarbon group substituted with halogen, or a $C_{1-20}$ alkoxy group, and

in Formula 6, L is a neutral or cationic Lewis base, $[L\text{-}H]^+$ and $[L]^+$ are a Bronsted acid, Z is a Group 13 element, and A is each independently a substituted or unsubstituted $C_{6-20}$ aryl group, or a substituted or unsubstituted $C_{1-20}$ alkyl group.

In an embodiment of the present invention, the catalyst may further comprise a carrier supporting the transition metal compound, the cocatalyst compound, or both.

In a preferred embodiment of the present invention, the carrier may comprise at least one selected from the group consisting of silica, alumina, and magnesia.

Here, the total amount of a hybrid transition metal compound supported on the carrier is 0.001 to 1 mmole based on 1 g of the carrier, and the total amount of the cocatalyst compound supported on the carrier is 2 to 15 mmole based on 1 g of the carrier.

In an embodiment of the present invention, the olefinic polymer is a copolymer of an olefinic monomer and an olefinic comonomer. Specifically, the olefinic monomer may be ethylene, and the olefinic comonomer may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene. Preferably, the olefinic polymer is a linear low density polyethylene wherein the olefinic monomer is ethylene and the olefinic comonomer is 1-hexene.

In another general aspect, there is provided a method for preparing an olefinic polymer, which includes: obtaining an olefinic polymer by polymerizing the olefinic monomer in the presence of a hybrid catalyst comprising at least one first transition metal compound represented by the following Formula 1 above; and at least one second transition metal compound selected from a compound represented by the following Formula 2 above and a compound represented by

the following Formula 3 above, wherein the olefinic polymer has a density of 0.9 to 0.95 g/cm3, preferably 0.91 to 0.945 g/cm$^3$, and satisfies the following Equations 1a and 2a:

[Equation 1a]

$$224.02 \times d - 86.257 < Tm$$

[Equation 2a]

$$219.64 \times d - 95.767 < Tc$$

wherein Tm is a melting temperature (°C), Tc is a crystallization temperature (°C), and d is a density (g/cm$^3$) of the olefinic polymer.

In an embodiment of the present invention, the olefinic polymer satisfies the following Equations 1b and 2b:

[Equation 1b]

$$Tm < 224.02 \times d - 82.257$$

[Equation 2b]

$$Tc < 219.64 \times d - 91.767$$

In an embodiment of the present invention, the polymerization of an olefinic monomer may be performed by gas-phase polymerization, and specifically, the polymerization of an olefinic monomer may be performed in a gas-phase fluidized bed reactor.

[Advantageous Effects]

The olefinic polymer according to an embodiment of the present invention has excellent heat resistance and may be utilized in spout pouches for high-temperature liquid containers, or the like. In particular, the olefinic polymer according to an embodiment of the present invention has a specific relationship between a melting temperature and a crystallization temperature respect to density and has a relatively high melting and crystallization temperatures at the same level of density. Thus, it is possible to provide an olefinic polymer that may be applied to various fields such as adhesives, films, and packaging materials by changing the density according to its use during polymerization of the olefinic polymer.

[Description of Drawings]

FIG. 1 is a graph illustrating a result of differential scanning calorimetry (DSC) measurement of olefinic polymers of Example 1 and Comparative Example 1.

FIG. 2 is a graph illustrating a result of differential scanning calorimetry measurement of olefinic polymers of Example 2 and Comparative Example 2.

[Best Mode]

Hereinafter, the present invention will be described in detail.

**Olefinic polymer**

According to an embodiment of the present invention, an olefinic polymer that has a density of 0.9 to 0.95 g/cm$^3$ and satisfies the following Equations 1a and 2a is provided:

[Equation 1a]

$$224.02 \times d - 86.257 < Tm$$

[Equation 2a]

$$219.64 \times d - 95.767 < Tc$$

wherein Tm is a melting temperature (°C), Tc is a crystallization temperature (°C), and d is a density (g/cm$^3$) of the olefinic polymer.

In an embodiment of the present invention, the olefinic polymer satisfies the following Equations 1b and 2b:

[Equation 1]

$$Tm < 224.02 \times d - 82.257$$

[Equation 2]

$$Tc < 219.64 \times d - 91.767$$

In an embodiment of the present invention, the olefinic polymer may have (1) a density of 0.918 to 0.945 g/cm$^3$; (2) a melt index ($I_{2.16}$) of 0.1 to 5.0 g/10 min under a load of 2.16 kg, when measured at 190°C; (3) a melt flow ratio (MFR) of 17 or more, when measured at 190°C, as a ratio of the melt index ($I_{21.6}$) under a load of 21.6 kg to the melt index ($I_{2.16}$) under a load of 2.16 kg; (4) a melting temperature of 120°C or more; and (5) a crystallization temperature of 107°C or more.

In an embodiment of the present invention, the olefinic polymer has a density of 0.9 to 0.95 g/cm$^3$. Preferably, the olefinic polymer may have a density of 0.91 to 0.945 g/cm3, 0.91 to 0.93 g/cm3, 0.918 to 0.945 g/cm3, 0.918 to 0.942 g/cm3, or 0.915 to 0.925 g/cm$^3$.

In an embodiment of the present invention, the olefinic polymer has a melt index ($I_{2.16}$) of 0.1 to 5.0 g/10 min under a load of 2.16 kg, when measured at 190°C. Preferably, the olefinic polymer may have a melt index of 0.3 to 4.0 g/10 min, 0.5 to 3.5 g/10 min, or 0.5 to 3.0 g/10 min under a load of 2.16 kg, when measured at 190°C.

In an embodiment of the present invention, the olefinic polymer has a melt flow ratio (MFR) of 17 or more when measured at 190°C, as a ratio of a melt index ($I_{21.6}$) under a load of 21.6 kg to a melt index ($I_{2.16}$) under a load of 2.16 kg. Preferably, the olefinic polymer may have an MFR of 20 or more, 22 or more, or 20 to 50.

In an embodiment of the present invention, the olefinic polymer has a melting temperature (Tm) of 118°C or more. Preferably, the olefinic polymer may have a melting temperature of 120°C or more, or 120 to 130°C.

In an embodiment of the present invention, the olefinic polymer has a crystallization temperature (Tc) of 106°C or more. Preferably, the olefinic polymer may have the crystallization temperature of 107°C or more, or 107 to 117°C.

The olefinic polymer according to an embodiment of the present invention is prepared by polymerizing an olefinic monomer in the presence of a hybrid catalyst comprising at least one first transition metal compound represented by the following Formula 1; and at least one second transition metal compound selected from a compound represented by the following Formula 2 and a compound represented by the following Formula 3:

[Formula 1]

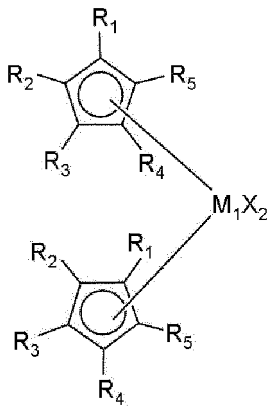

[Formula 2]

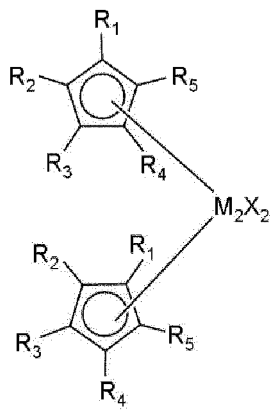

[Formula 3]

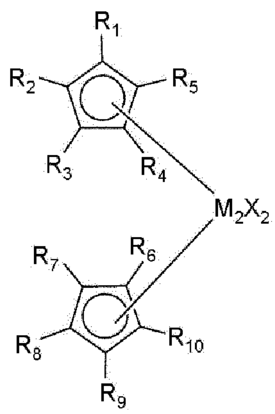

wherein $M_1$ and $M_2$ are different from each other and are each independently titanium (Ti), zirconium (Zr), or hafnium (Hf). Specifically, $M_1$ and $M_2$ are different from each other and may each be zirconium or hafnium. Preferably, $M_1$ may be hafnium and $M_2$ may be zirconium.

X is each independently halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido. Specifically, each X may be halogen or $C_{1-20}$ alkyl. Preferably, X may be chlorine or methyl.

$R_1$ to $R_{10}$ are each independently hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, provided that $R_1$ to $R_{10}$ are each independently capable of being linked to adjacent groups to form a substituted or unsubstituted saturated or unsaturated $C_{4-20}$ ring. Specifically, $R_1$ to $R_{10}$ may each be hydrogen, substituted or unsubstituted $C_{1-20}$ alkyl, substituted or unsubstituted $C_{1-20}$ alkenyl, or substituted or unsubstituted $C_{6-20}$ aryl.

In an embodiment of the present invention, $M_1$ and $M_2$ are different from each other and may each be zirconium or hafnium, X may each be halogen or $C_{1-20}$ alkyl, and $R_1$ to $R_{10}$ may each be hydrogen, substituted or unsubstituted $C_{1-20}$ alkyl, substituted or unsubstituted $C_{1-20}$ alkenyl, or substituted or unsubstituted $C_{6-20}$ aryl.

In a preferred embodiment of the invention, $M_1$ may be hafnium, $M_2$ may be zirconium, and X may be chlorine or methyl.

In a preferred embodiment of the present invention, the first transition metal compound may be at least one of the transition metal compounds represented by the following Formulas 1-1 and 1-2, and the second transition metal compound may be at least one of transition metal compounds represented by the following Formulas 2-1, 2-2, and 3-1:

[Formula 1-1] [Formula 1-2]

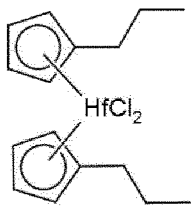
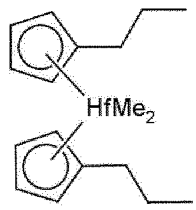

[Formula 2-1] [Formula 2-2] [Formula 3-1]

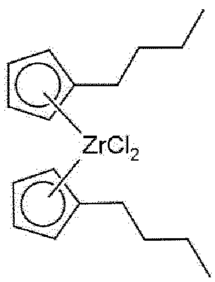
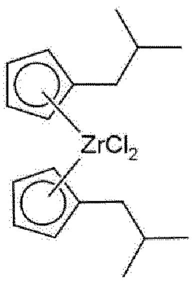
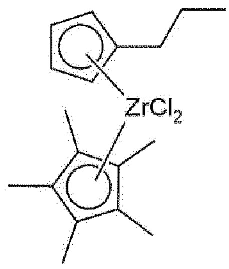

wherein Me is a methyl group.

In an embodiment of the present invention, a molar ratio of the first transition metal compound to the second transition metal compound is in a range of 100:1 to 1:100. Preferably, a molar ratio of the first transition metal compound to the second transition metal compound is in a range of 50:1 to 1:50. Preferably, a molar ratio of the first transition metal compound to the second transition metal compound is in a range of 10:1 to 1:10.

In an embodiment of the present invention, the catalyst may comprise at least one cocatalyst compound selected from the group consisting of a compound represented by the following Formula 4, a compound represented by the following Formula 5, and a compound represented by the following Formula 6:

[Formula 4]

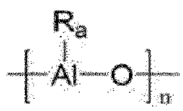

wherein n may be an integer of 2 or more, and $R_a$ may be a halogen atom, $C_{1-20}$ hydrocarbon, or $C_{1-20}$ hydrocarbon substituted with a halogen. Specifically, $R_a$ may be methyl, ethyl, n-butyl, or isobutyl.

[Formula 5]

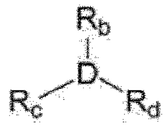

wherein D is aluminum (Al) or boron (B), and $R_b$, $R_c$, and $R_d$ are each independently a halogen atom, a $C_{1-20}$ hydrocarbon group, a $C_{1-20}$ hydrocarbon group substituted with halogen, or a $C_{1-20}$ alkoxy group. Specifically, when D is aluminum (Al), $R_b$, $R_c$ and $R_d$ may each independently be methyl or isobutyl, and when D is boron (B), $R_b$, $R_c$ and $R_d$ may each be pentafluorophenyl.

[Formula 6] $[L-H]^+[Z(A)_4]^-$ or $[L]^+[Z(A)_4]^-$

wherein L is a neutral or cationic Lewis base, $[L-H]^+$ and $[L]^+$ are a Bronsted acid, Z is a Group 13 element, and A is each independently a substituted or unsubstituted $C_{6-20}$ aryl group, or a substituted or unsubstituted $C_{1-20}$ alkyl group. Specifically, $[L-H]^+$ may be a dimethylanilinium cation, $[Z(A)_4]^-$ may be $[B(C_6F_5)_4]^-$, and $[L]^+$ may be $[(C_6H_5)_3C]^+$.

Specifically, examples of the compound represented by Formula 4 above may include, but are not limited to, methylaluminoxane, ethylaluminoxane, isobutylaluminoxane, butylaluminoxane, etc., preferably methylaluminoxane.

Examples of the compound represented by Formula 5 above may include, but are not limited to, trimethylaluminum, triethylaluminium, triisobutylaluminum, tripropylaluminum, tributylaluminum, dimethylchloroaluminum, triisopropylaluminum, tri-s-butyl aluminum, tricyclopentyl aluminum, tripentyl aluminum, triisopentyl aluminum, trihexyl aluminum, trioctyl aluminum, ethyl dimethyl aluminum, methyl diethyl aluminum, triphenyl aluminum, trip-tolylaluminum, dimethylaluminum methoxide, dimethylaluminum ethoxide, trimethylboron, triethylboron, triisobutylboron, tripropylboron, tributylboron, etc., preferably trimethylaluminum, triethylaluminum, and triisobutylaluminum.

Examples of the compound represented by Formula 6 above may include triethylammonium tetraphenylborate, tributylammonium tetraphenylborate, trimethylammonium tetraphenylborate, tripropylammonium tetraphenylborate, trimethylammonium tetra(*p*-tolyl)borate, trimethylammonium tetra(*o,p*-dimethylphenyl)borate, tributylammonium tetra(*p*-trifluoromethylphenyl)borate, trimethylammonium tetra(*p*-trifluoromethylphenyl)borate, tributylammonium tetrapentafluorophenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, triethylammonium tetraphenylaluminate, tributylammonium tetraphenylaluminate, trimethylammonium tetraphenylaluminate, tripropylammonium tetraphenyl aluminate, trimethylammonium tetra(*p*-tolyl)aluminate, tripropylammonium tetra(*p*-tolyl)aluminate, triethylammonium tetra(*o,p*-dimethylphenyl)aluminate, tributylammonium tetra(*p*-trifluoromethylphenyl)aluminate, trimethylammonium tetra(*p*-trifluoromethylphenyl)aluminate, tributylammonium tetrapentafluorophenyl aluminate, N,N-diethylanilinium tetraphenylaluminate, N,N-diethylanilinium tetrapentafluorophenylaluminate, diethylammonium tetrapentatetraphenylaluminate, triphenylphosphonium tetraphenylaluminate, trimethylphosphonium tetraphenylaluminate, tripropylammonium tetra(*p*-tolyl)borate, triethylammonium tetra(*o*,*p*-dimethylphenyl)borate, tributylammonium tetra(*p*-trifluoromethylphenyl)borate, triphenylcarboniumtetra(*p*-trifluoromethylphenyl)borate, triphenylcarbonium tetrapentafluorophenylborate, etc.

In an embodiment of the present invention, the catalyst may further comprise a carrier supporting a transition metal compound, a cocatalyst compound, or both. Specifically, the carrier may support both of the transition metal compound and the cocatalyst compound.

Here, the carrier may comprise a material containing a hydroxyl group on its surface. Preferably, a material that has been dried to remove moisture form its surface and has a highly reactive hydroxyl group and siloxane group may be used. For example, the carrier may comprise at least one selected from the group consisting of silica, alumina, and magnesia. Specifically, silica, silica-alumina, and silica-magnesia dried at high temperatures may be used as carriers. They may usually comprise oxide, carbonate, sulfate, and nitrate components such as $Na_2O$, $K_2CO_3$, $BaSO_4$, and $Mg(NO_3)_2$. In addition, they may comprise carbon, zeolite, magnesium chloride, etc. However, the carrier is not limited thereto. It is not particularly limited as long as it can support the transition metal compound and the cocatalyst compound.

The carrier may have an average particle size of 10 to 250 um, preferably 10 to 150 $\mu$m, and more preferably 20 to 100 $\mu$m.

The carrier may have a micropore volume of 0.1 to 10 cc/g, preferably 0.5 to 5 cc/g, and more preferably 1.0 to 3.0 cc/g.

The carrier may have a specific surface area of 1 to 1,000 $m^2/g$, preferably 100 to 800 $m^2/g$, and more preferably

200 to 600 $m^2$/g.

In a preferred embodiment of the present invention, the carrier may be silica. Here, the drying temperature of the silica may be 200 to 900°C. The drying temperature may preferably be 300 to 800°C, and more preferably 400 to 700°C. If the drying temperature is lower than 200°C, there would be too much moisture so that the moisture on the surface and the cocatalyst may react. If the drying temperature exceeds 900°C, the structure of the carrier may collapse.

The dried silica may have a concentration of hydroxy groups of 0.1 to 5 mmol/g, preferably 0.7 to 4 mmol/g, and more preferably 1.0 to 2 mmol/g. If the concentration of hydroxy groups is less than 0.1 mmol/g, the amount supported of the first cocatalyst compound may be lowered. If the concentration of the hydroxy group exceeds 5 mmol/g, there may arise a problem that the catalyst component may be inactivated.

The total amount of the transition metal compound supported on a carrier may be 0.001 to 1 mmole based on 1 g of the carrier. When a ratio of the transition metal compound and the carrier satisfies the above range, an appropriate activity of the supported catalyst may be exhibited, which is advantageous from the viewpoint of maintaining the activity of the catalyst and economic efficiency.

The total amount of the cocatalyst compound supported on a carrier may be 2 to 15 mmole based on 1 g of the carrier. If a ratio of the cocatalyst compound and the carrier satisfies the above range, it is advantageous from the viewpoint of maintaining the activity of the catalyst and economic efficiency.

One or two or more types of a carrier may be used. For example, both the transition metal compound and the cocatalyst compound may be supported on one type of a carrier, or the transition metal compound and the cocatalyst compound may be supported on two or more types of a carrier, respectively. In addition, either one of the transition metal compound and the cocatalyst compound may be supported on a carrier.

As a method for supporting the transition metal compound and/or cocatalyst compound that may be used in the catalyst for olefin polymerization, a physical adsorption method or a chemical adsorption method may be used.

For example, the physical adsorption method may be a method of contacting a solution in which a transition metal compound has been dissolved with a carrier and then drying the same; a method of contacting a solution in which a transition metal compound and a cocatalyst compound have been dissolved with a carrier and then drying the same; and a method of contacting a solution in which a transition metal compound has been dissolved with a carrier and then drying the same to prepare the carrier that supports the transition metal compound, separately contacting a solution in which a cocatalyst compound has been dissolved with a carrier and then drying the same to prepare the carrier that supports the cocatalyst compound, and the mixing them.

The chemical adsorption method may be a method of supporting a cocatalyst compound on the surface of a carrier and then supporting a transition metal compound on the cocatalyst compound, or a method of covalently bonding a functional group on the surface of the carrier (e.g., a hydroxyl group (-OH) on the silica surface in the case of silica) with a catalyst compound.

In an embodiment of the present invention, the olefinic polymer may be a homopolymer of an olefinic monomer or a copolymer of an olefinic monomers and an olefic comonomer. Preferably, the olefinic polymer is a copolymer of an olefinic monomer and an olefinic comonomer.

Here, the olefinic monomer is at least one selected from the group consisting of a $C_{2-20}$ alpha-olefin, a $C_{1-20}$ diolefin, a $C_{3-20}$ cycloolefin, and a $C_{3-20}$ cyclodiolefin.

For example, the olefinic monomer may include ethylene, propylene, 1-butene, 1-pentene, 4-methyl-1-pentene, 1-hexene, 1-heptene, 1-octene, 1-decene, 1-undecene, 1-dodecene, 1-tetradecene, or 1-hexadecene, etc., and the olefinic polymer may include a homopolymer comprising only one olefinic monomer exemplified above or a copolymer comprising two or more of the olefinic monomers exemplified above.

As an exemplary embodiment, the olefinic polymer may be a copolymer of ethylene and a $C_{3-20}$ alpha-olefin. Preferably, the olefinic polymer may be a linear low density polyethylene wherein the olefinic monomer is ethylene and the olefinic comonomer is 1-hexene.

In this case, the content of ethylene is preferably 55 to 99.9% by weight, and more preferably 90 to 99.9% by weight. The content of the alpha-olefinic comonomer is preferably 0.1 to 45% by weight, and more preferably 0.1 to 10% by weight.

## Method for preparing olefinic polymers

According to an embodiment of the present invention, there is provided a method for preparing an olefinic polymer, which includes: obtaining an olefinic polymer by polymerizing an olefinic monomer in the presence of a hybrid catalyst comprising at least one first transition metal compound represented by the following Formula 1; and at least one second transition metal compound selected from a compound represented by the following Formula 2 and a compound represented by the following Formula 3:

[Formula 1]

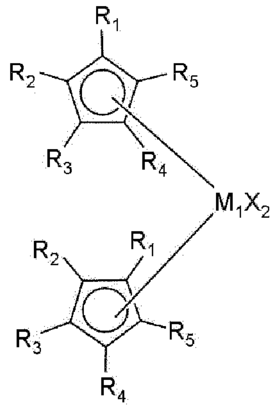

[Formula 2]

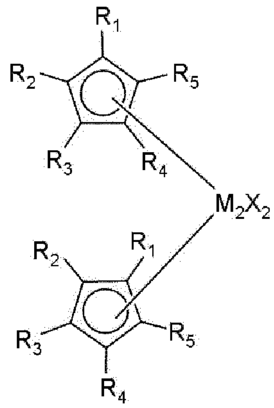

[Formula 3]

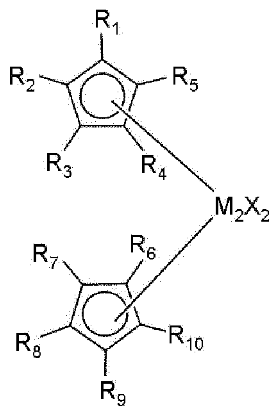

$M_1$, $M_2$, X, and $R_1$ to $R_{10}$ are as described in the above olefinic polymer section.

As described above, the olefinic polymer prepared by the preparation method according to one embodiment of the present invention has a density of 0.9 to 0.95 g/cm$^3$ and satisfies the following Equations 1a and 2a:

[Equation 1a]

$$224.02 \times d - 86.257 < Tm$$

[Equation 2a]

$$219.64 \times d - 95.767 < Tc$$

wherein Tm is a melting temperature (°C), Tc is a crystallization temperature (°C), and d is a density (g/cm$^3$) of the olefinic polymer.

In an embodiment of the present invention, the olefinic polymer satisfies the following Equation 1b and 2b:

[Equation 1]

$$Tm < 224.02 \times d - 82.257$$

[Equation 2]

$$Tc < 219.64 \times d - 91.767$$

In an embodiment of the present invention, the olefinic polymer may have (1) a density of 0.918 to 0.945 g/cm$^3$; (2) a melt index ($I_{2.16}$) of 0.1 to 5.0 g/10 min under a load of 2.16 kg, when measured at 190°C; (3) a melt flow ratio (MFR) of 17 or more, when measured at 190°C, as a ratio of the melt index ($I_{21.6}$) under a load of 21.6 kg to the melt index ($I_{2.16}$) under a load of 2.16 kg; (4) a melting temperature of 120°C or more; and (5) a crystallization temperature of 107°C or more.

In an embodiment of the present invention, the olefinic polymer may be polymerized by, for example, polymerization reactions such as free radical, cationic, coordination, condensation, and addition, but it is not limited thereto.

As an example of the present invention, the olefinic polymer may be prepared by gas-phase polymerization method, a solution polymerization method, or a slurry polymerization method. Preferably, the polymerization of the olefinic monomers may be performed by gas-phase polymerization. Specifically, the polymerization of an olefinic monomer may be performed in a gas-phase fluidized bed reactor.

When the olefinic polymer is prepared by a solution polymerization method or a slurry polymerization method, examples of solvents that may be used may include, but are not limited thereto, $C_{5-12}$ aliphatic hydrocarbon solvents such as pentane, hexane, heptane, nonane, decane, and isomers thereof; aromatic hydrocarbon solvents such as toluene and benzene; hydrocarbon solvents substituted with chlorine atoms such as dichloromethane and chlorobenzene; and mixtures thereof.

[Mode for Invention]

## Examples

Hereinafter, the present invention will be described in more detail with reference to examples. However, the following examples are only for exemplifying the present invention, and the scope of the present invention is not limited only to these.

## Preparation Example

A transition metal compound of Formula 1-1 (bis(n-propylcyclopentadienyl) hafnium dichloride) and a transition metal compound of Formula 2-1 (bis(n-butylcyclopentadienyl) zirconium dichloride) were purchased from TCI and used without an additional purification process.

892 g of a toluene solution of 10% methylaluminoxane was added to 4.47 g of the transition metal compound of Formula 1-1 and 1.67 g of the transition metal compound of Formula 2-1, followed by stirring at room temperature for 1 hour. After the reaction, the solution was added to 200 g of silica (XPO-2402), and further 1.5 liters of toluene was

added thereto, followed by stirring at 70°C for 2 hours. The supported catalyst was washed with 500 ml of toluene and dried in a vacuum at 60° C overnight to obtain 280 g of the supported catalyst in powder form.

Examples 1 to 3

An ethylene/1-hexene copolymer was prepared in the presence of the supported catalyst obtained in Preparation Example 1 in a gas-phase fluidized bed reactor. The partial pressure of ethylene in the reactor was maintained at about 15 kg/cm2, and the polymerization temperature was maintained at 70 to 90°C.

Polymerization conditions of the Examples are shown in Table 1 below.

[Table 1]

| | Example 1 | Example 2 | Example 3 |
|---|---|---|---|
| Polymerization temperature (°C) | 80.1 | 80.9 | 79.9 |
| Catalyst feed amount | 1.2 | 1.4 | 2.0 |
| (g/h) | | | |
| Hydrogen feed amount (g/h) | 2.66 | 2.34 | 2.11 |
| 1-Hexene feed amount (kg/h) | 2.29 | 1.63 | 1.37 |
| Ratio of hydrogen/ethylene concentration (%) | 0.053 | 0.048 | 0.043 |
| Ratio of 1-hexene/ethylene concentration (%) | 2.44 | 1.99 | 1.73 |

Comparative Example 1

For comparison, linear low-density polyethylene VL0001 (density 0.900 g/cm3, melt index 1.0 g/10 min) from DL Chemical and linear low-density polyethylene M1810HA (density 0.9200 g/cm3, melt index 1.0 g/10 min) from Hanwha Solutions were used.

**Test Example**

The physical properties of the olefinic polymers prepared in the Examples were measured according to the following methods and standards. The results are shown in Table 2 below.

(1) Density

It was measured in accordance with ASTM D1505.

(2) Melt index and melt flow ratio (MFR)

The melt index was measured at 190°C under a load of 21.6 kg and a load of 2.16 kg, respectively in accordance with ASTM D 1238. Their ratio ($MI_{21.6}/MI_{2.16}$) was calculated.

(3) Melting temperature and crystallization temperature

The thermal properties of the resin were measured using a differential scanning calorimeter (DSC). A first endothermic curve was obtained while raising the temperature from 30°C to 170°C at 10°C/min. Then, after maintaining the temperature at 170°C for 5 minutes, an exothermic curve was obtained while decreasing the temperature to -20°C at 10°C/min. In addition, a second endothermic curve was obtained while raising the temperature from -20° C to 170°C at 10°C/min.

[Table 2]

| | Unit | Example 1 | Example 2 | Example 3 | Compara tive Example 1 | Compara tive Example 2 |
|---|---|---|---|---|---|---|
| $MI_{2.16}$ | g/10 min | 0.99 | 1.06 | 0.97 | 1.05 | 1.01 |
| $MI_{21.16}$ | g/10 min | 24.8 | 24.9 | 17.1 | 17.1 | 16.6 |

(continued)

| | Unit | Example 1 | Example 2 | Example 3 | Compara tive Example 1 | Compara tive Example 2 |
|---|---|---|---|---|---|---|
| MFR | - | 25.1 | 23.5 | 17.6 | 16.3 | 16.4 |
| Density | $g/cm^3$ | 0.908 | 0.918 | 0.929 | 0.906 | 0.920 |
| $T_m$ | °C | 119.2 | 121.3 | 123.9 | 108.3 | 117 |
| $T_c$ | °C | 105.8 | 107.6 | 110.4 | 92.1 | 104.2 |
| Crystal linity | % | 31.9 | 40.6 | 45 | 29.6 | 42.1 |

As confirmed from Table 2 and FIGS. 1 and 2 above, the olefinic polymer according to the embodiment of the present invention has high melting temperature and a high crystallization temperature, so that the resin has excellent heat resistance. Therefore, the olefinic polymer according to an embodiment of the present invention may be utilized in spout pouches for high-temperature liquid containers, or the like.

[Industrial Applicability]

The present invention may provide an olefinic polymer having excellent heat resistance. Therefore, the olefinic polymer according to an embodiment of the present invention may be utilized in spout pouches for high-temperature liquid containers, or the like.

## Claims

**1.** An olefinic polymer that has a density of 0.9 to 0.95 g/cm3 and satisfies the following Equations 1a and 2a:

[Equation 1]

$$224.02 \times d - 86.257 < Tm$$

[Equation 2a]

$$219.64 \times d - 95.767 < Tc$$

wherein Tm is a melting temperature (°C), Tc is a crystallization temperature (°C), and d is a density ($g/cm^3$) of the olefinic polymer.

**2.** The olefinic polymer of claim 1, which satisfies the following Equations 1b and 2b:

[Equation 1b]

$$Tm < 224.02 \times d - 82.257$$

[Equation 2b]

$$Tc < 219.64 \times d - 91.767$$

wherein Tm, Tc, and d are as described in claim 1.

**3.** The olefinic polymer of claim 1, wherein the olefinic polymer is prepared by polymerizing an olefinic monomer in the presence of a hybrid catalyst comprising at least one first transition metal compound represented by the following Formula 1; and at least one second transition metal compound selected from a compound represented by the

following Formula 2 and a compound represented by the following Formula 3:

[Formula 1]

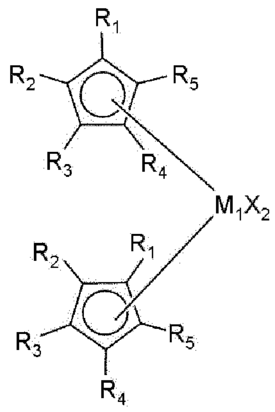

[Formula 2]

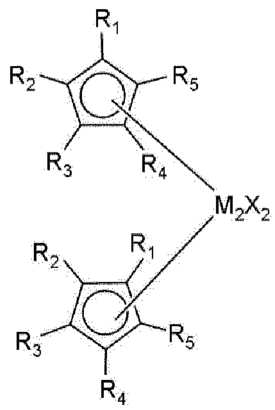

[Formula 3]

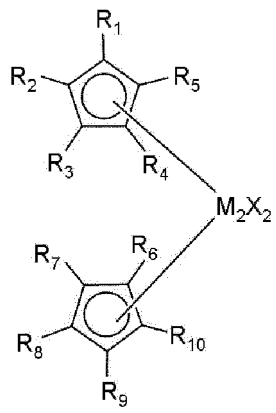

wherein $M_1$ and $M_2$ are different from each other and are each independently titanium (Ti), zirconium (Zr), or hafnium (Hf),

X is each independently halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$

aryl $C_{1-20}$ alkyl, $C_{1-20}$ alkylamido, or $C_{6-20}$ arylamido, and
$R_1$ to $R_{10}$ are each independently hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, provided that $R_1$ to $R_{10}$ are each independently capable of being linked to adjacent groups to form a substituted or unsubstituted saturated or unsaturated $C_{4-20}$ ring.

**4.** The olefinic polymer of claim 3, wherein $M_1$ and $M_2$ are different from each other and are each zirconium or hafnium, each X is halogen or $C_{1-20}$ alkyl, and $R_1$ to $R_{10}$ are each hydrogen, substituted or unsubstituted $C_{1-20}$ alkyl, substituted or unsubstituted $C_{1-20}$ alkenyl, or substituted or unsubstituted $C_{6-20}$ aryl.

**5.** The olefinic polymer of claim 4, wherein $M_1$ is hafnium, $M_2$ is zirconium, and X is chlorine or methyl.

**6.** The olefinic polymer of claim 3, wherein the first transition metal compound is at least one of the transition metal compounds represented by the following Formulas 1-1 and 1-2, and the second transition metal compound is at least one of transition metal compounds represented by the following Formulas 2-1, 2-2, and 3-1:

[Formula 1-1] [Formula 1-2]

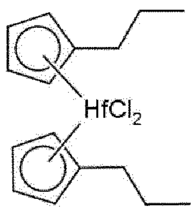
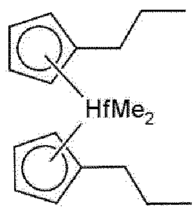

[Formula 2-1] [Formula 2-2] [Formula 3-1]

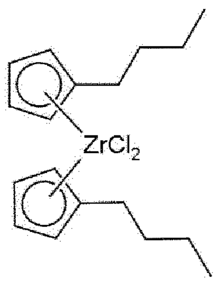
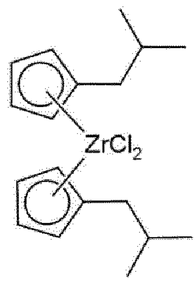
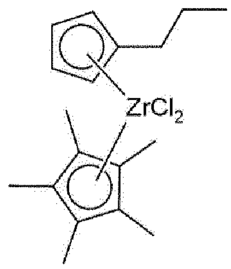

wherein Me is a methyl group.

**7.** The olefinic polymer of claim 3, wherein a molar ratio of the first transition metal compound to the second transition metal compound is in a range of 100:1 to 1:100.

**8.** The olefinic polymer of claim 3, wherein the catalyst comprises at least one cocatalyst selected from the group consisting of a compound represented by the following Formula 4, a compound represented by the following Formula 5, and a compound represented by the following Formula 6:

[Formula 4]

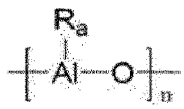

[Formula 5]

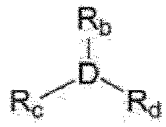

[Formula 6] $[L-H]^+[Z(A)_4]^-$ or $[L]^+[Z(A)_4]^-$

in Formula 4, n is an integer of 2 or more, and $R_a$ is a halogen atom, a $C_{1-20}$ hydrocarbon group, or $C_{1-20}$ hydrocarbon group substituted with halogen,
in Formula 5, D is aluminum (Al) or boron (B), and $R_b$, $R_c$, and $R_d$ are each independently a halogen atom, a $C_{1-20}$ hydrocarbon group, a $C_{1-20}$ hydrocarbon group substituted with halogen, or a $C_{1-20}$ alkoxy group, and
in Formula 6, L is a neutral or cationic Lewis base, $[L-H]^+$ and $[L]^+$ are a Bronsted acid, Z is a Group 13 element, and A is each independently a substituted or unsubstituted $C_{6-20}$ aryl group, or a substituted or unsubstituted $C_{1-20}$ alkyl group.

**9.** The olefinic polymer of claim 8, wherein the catalyst further comprises a carrier supporting the transition metal compound, the cocatalyst compound, or both.

**10.** The olefinic polymer of claim 9, wherein the carrier comprises at least one selected from the group consisting of silica, alumina, and magnesia.

**11.** The olefinic polymer of claim 9, wherein the total amount of a hybrid transition metal compound supported on the carrier is 0.001 to 1 mmole based on 1 g of the carrier, and the total amount of the cocatalyst compound supported on the carrier is 2 to 15 mmole based on 1 g of the carrier.

**12.** The olefinic polymer of claim 1, wherein the olefinic polymer is a copolymer of an olefinic monomer and an olefinic comonomer.

**13.** The olefinic polymer of claim 12, wherein the olefinic monomer is ethylene, and the olefinic comonomer is at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene.

**14.** The olefinic polymer of claim 13, wherein the olefinic polymer is a linear low density polyethylene wherein the olefinic monomer is ethylene and the olefinic comonomer is 1-hexene.

**15.** A method for preparing an olefinic polymer, comprising:

obtaining an olefinic polymer by polymerizing an olefinic monomer in the presence of a hybrid catalyst comprising at least one first transition metal compound represented by the following Formula 1; and at least one second transition metal compound selected from a compound represented by the following Formula 2 and a compound represented by the following Formula 3,
wherein the olefinic polymer has a density of 0.9 to 0.95 $g/cm^3$, and satisfies the following Equations 1a and 2a:

[Formula 1]

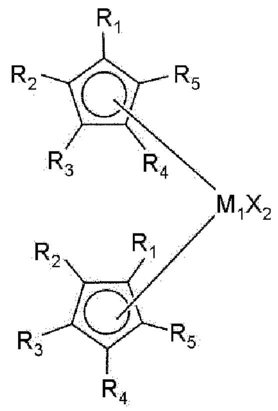

[Formula 2]

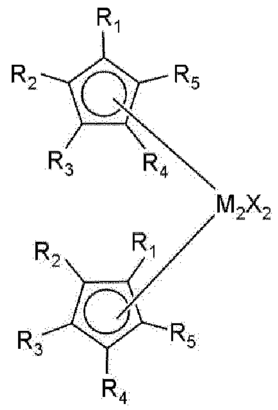

[Formula 3]

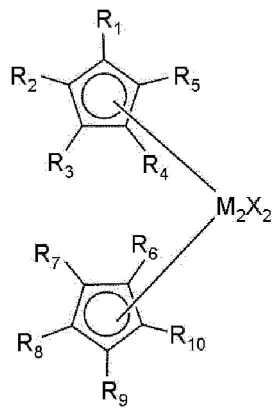

[Equation 1a]

$$224.02 \times d - 86.257 < Tm$$

[Equation 2a]

$$219.64 \times d - 95.767 < Tc$$

wherein $M_1$, $M_2$, X, and $R_1$ to $R_{10}$ are as defined in claim 3, and Tm, Tc, and d are as described in claim 1.

**16.** The method of claim 15, which satisfies the following Equations 1b and 2b:

[Equation 1b]

$$Tm < 224.02 \times d - 82.257$$

[Equation 2b]

$$Tc < 219.64 \times d - 91.767$$

wherein, Tm, Tc, and d are as described in claim 1.

**17.** The method of claim 15, wherein the polymerization of an olefinic monomer is performed by gas-phase polymerization.

FIG. 1

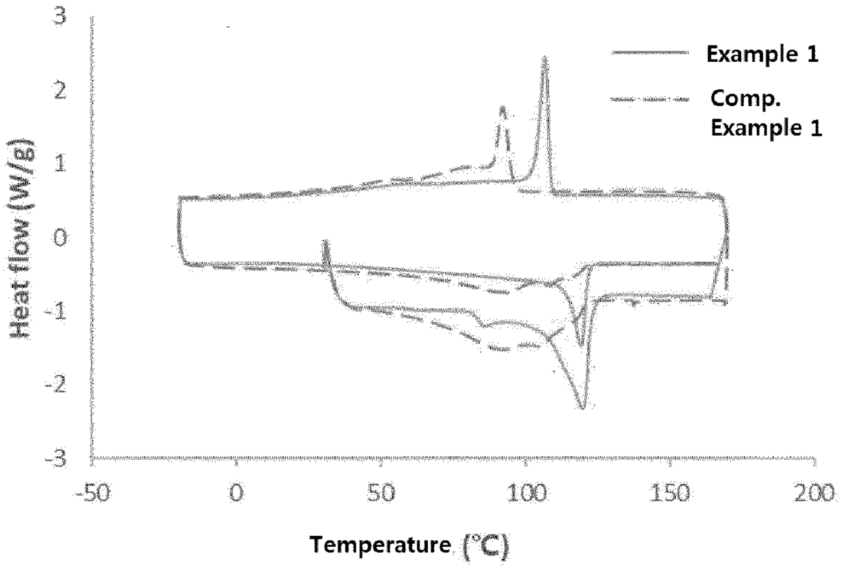
Example 1
Comp.
Example 1
Heat flow (W/g)
3
2
1
0
-1
-2
-3
-50
0
50
100
150
200
Temperature (°C)

FIG. 2

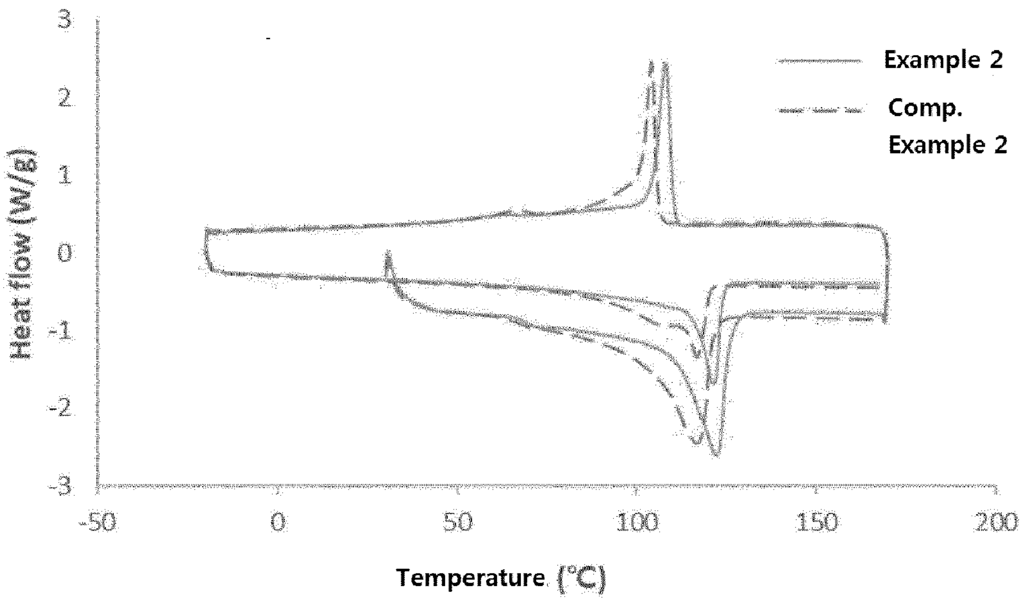
Example 2
Comp.
Example 2
Heat flow (W/g)
3
2
1
0
-1
-2
-3
-50
0
50
100
150
200
Temperature (°C)

## INTERNATIONAL SEARCH REPORT

International application No.
**PCT/KR2021/018086**

### A. CLASSIFICATION OF SUBJECT MATTER

**C08F 210/16**(2006.01)i; **C08F 210/14**(2006.01)i; **C08F 2/34**(2006.01)i; **C08F 4/659**(2006.01)i; **C08F 4/6592**(2006.01)i; **C08F 4/02**(2006.01)i; **C07F 17/00**(2006.01)i

According to International Patent Classification (IPC) or to both national classification and IPC

### B. FIELDS SEARCHED

Minimum documentation searched (classification system followed by classification symbols)

C08F 210/16(2006.01); C07F 17/00(2006.01); C07F 7/00(2006.01); C08F 10/02(2006.01); C08F 110/02(2006.01); C08F 210/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 밀도(density), 용융지수(MI, melt-index), 혼성촉매(hybride catalyst), 메탈로센(metallocene), 하프늄(hafnium, Hf), 지르코늄(zirconium, Zr), 올레핀(olefin)

### C. DOCUMENTS CONSIDERED TO BE RELEVANT

| Category* | Citation of document, with indication, where appropriate, of the relevant passages | Relevant to claim No. |
|---|---|---|
| X | US 2005-0159300 A1 (JENSEN, M. D. et al.) 21 July 2005 (2005-07-21)<br>See claims 1-18, 32, 34 and 36-38; and paragraphs [0154], [0266]-[0269], [0274], [0376], [0377], [0387] and [0388]. | 1-17 |
| A | JP 2015-113282 A (KOEI CHEM. CO., LTD.) 22 June 2015 (2015-06-22)<br>See paragraphs [0002] and [0042]. | 1-17 |
| A | WO 2019-027585 A1 (EXXONMOBIL CHEMICAL PATENTS INC.) 07 February 2019 (2019-02-07)<br>See claims 1-28. | 1-17 |
| A | US 2002-0119890 A1 (WENZEL, T. T. et al.) 29 August 2002 (2002-08-29)<br>See claims 1-35. | 1-17 |
| A | US 2016-0362510 A1 (UNIVATION TECHNOLOGIES, LLC) 15 December 2016 (2016-12-15)<br>See claims 17, 20, 21, 23, 25-27, 30 and 32; and paragraphs [0200]-[0214]. | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2022** | **28 March 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/018086**

| Patent document cited in search report | Publication date (day/month/year) | Patent family member(s) | Publication date (day/month/year) |
|---|---|---|---|
| US 2005-0159300 A1 | 21 July 2005 | AU 2005-206563 A1 | 04 August 2005 |
| | | AU 2005-206563 B2 | 16 December 2010 |
| | | AU 2010-246340 A1 | 09 December 2010 |
| | | AU 2010-246340 B2 | 26 July 2012 |
| | | CN 101475654 A | 08 July 2009 |
| | | CN 101475654 B | 02 January 2013 |
| | | CN 1930196 A | 14 March 2007 |
| | | EP 1706437 A1 | 04 October 2006 |
| | | EP 1706437 B1 | 20 January 2016 |
| | | JP 2007-518871 A | 12 July 2007 |
| | | JP 2011-140658 A | 21 July 2011 |
| | | JP 2014-210937 A | 13 November 2014 |
| | | JP 5623315 B2 | 12 November 2014 |
| | | JP 5952870 B2 | 13 July 2016 |
| | | US 2006-0229420 A1 | 12 October 2006 |
| | | US 7119153 B2 | 10 October 2006 |
| | | US 7572875 B2 | 11 August 2009 |
| | | WO 2005-070977 A1 | 04 August 2005 |
| JP 2015-113282 A | 22 June 2015 | None | |
| WO 2019-027585 A1 | 07 February 2019 | CN 111094366 A | 01 May 2020 |
| | | CN 111108130 A | 05 May 2020 |
| | | CN 111212857 A | 29 May 2020 |
| | | CN 111491959 A | 04 August 2020 |
| | | EP 3661975 A1 | 10 June 2020 |
| | | EP 3661981 A1 | 10 June 2020 |
| | | EP 3661984 A1 | 10 June 2020 |
| | | EP 3661984 B1 | 19 January 2022 |
| | | EP 3697822 A1 | 26 August 2020 |
| | | US 10844150 B2 | 24 November 2020 |
| | | US 10913808 B2 | 09 February 2021 |
| | | US 2019-0040167 A1 | 07 February 2019 |
| | | US 2019-0040168 A1 | 07 February 2019 |
| | | US 2020-0165366 A1 | 28 May 2020 |
| | | US 2020-0231790 A1 | 23 July 2020 |
| | | WO 2019-027586 A1 | 07 February 2019 |
| | | WO 2019-027587 A1 | 07 February 2019 |
| | | WO 2019-027605 A1 | 07 February 2019 |
| US 2002-0119890 A1 | 29 August 2002 | US 2004-0039138 A1 | 26 February 2004 |
| | | US 2005-0256280 A1 | 17 November 2005 |
| | | US 6656866 B2 | 02 December 2003 |
| | | US 6982236 B2 | 03 January 2006 |
| | | US 7384884 B2 | 10 June 2008 |
| US 2016-0362510 A1 | 15 December 2016 | AU 2015-217386 A1 | 08 September 2016 |
| | | AU 2015-217386 B2 | 06 December 2018 |
| | | AU 2015-217387 A1 | 15 September 2016 |
| | | AU 2015-217387 B2 | 06 December 2018 |
| | | AU 2015-217388 A1 | 15 September 2016 |
| | | AU 2015-217388 B2 | 20 September 2018 |
| | | AU 2015-217390 A1 | 15 September 2016 |
| | | AU 2015-217390 B2 | 29 November 2018 |

Form PCT/ISA/210 (patent family annex) (July 2019)

**INTERNATIONAL SEARCH REPORT**
**Information on patent family members**

International application No.
**PCT/KR2021/018086**

| Patent document cited in search report | Publication date (day/month/year) | Patent family member(s) | Publication date (day/month/year) |
|---|---|---|---|
| | | AU 2015-217391 A1 | 15 September 2016 |
| | | AU 2015-217391 B2 | 15 November 2018 |
| | | AU 2015-217393 A1 | 20 August 2015 |
| | | AU 2015-217393 B2 | 20 December 2018 |
| | | AU 2015-217394 A1 | 20 August 2015 |
| | | AU 2015-217394 B2 | 13 December 2018 |
| | | AU 2015-217400 A1 | 20 August 2015 |
| | | AU 2015-217400 B2 | 20 December 2018 |
| | | AU 2015-217402 A1 | 20 August 2015 |
| | | AU 2015-217402 B2 | 08 November 2018 |
| | | CN 105980423 A | 28 September 2016 |
| | | CN 105980424 B | 21 May 2019 |
| | | CN 106034402 B | 31 May 2019 |
| | | CN 106062016 B | 08 October 2019 |
| | | CN 109535299 A | 29 March 2019 |
| | | CN 110330580 A | 15 October 2019 |
| | | CN 110330581 A | 15 October 2019 |
| | | CN 110330582 A | 15 October 2019 |
| | | CN 110540612 A | 06 December 2019 |
| | | EP 3105257 A2 | 21 December 2016 |
| | | EP 3105257 B1 | 21 October 2020 |
| | | EP 3105258 A1 | 21 December 2016 |
| | | EP 3105259 A2 | 21 December 2016 |
| | | EP 3105259 B1 | 11 November 2020 |
| | | EP 3105261 A1 | 21 December 2016 |
| | | EP 3105262 A1 | 21 December 2016 |
| | | EP 3105263 A1 | 21 December 2016 |
| | | EP 3105264 A1 | 21 December 2016 |
| | | EP 3105265 A1 | 21 December 2016 |
| | | EP 3105265 B1 | 02 June 2021 |
| | | EP 3105266 A1 | 21 December 2016 |
| | | EP 3105266 B1 | 25 March 2020 |
| | | EP 3660058 A1 | 03 June 2020 |
| | | EP 3663323 A1 | 10 June 2020 |
| | | EP 3677605 A1 | 08 July 2020 |
| | | EP 3778671 A1 | 17 February 2021 |
| | | EP 3805278 A1 | 14 April 2021 |
| | | JP 2017-505376 A | 16 February 2017 |
| | | JP 2017-505846 A | 23 February 2017 |
| | | JP 2017-506281 A | 02 March 2017 |
| | | JP 2017-507017 A | 16 March 2017 |
| | | JP 2017-508834 A | 30 March 2017 |
| | | JP 2019-143160 A | 29 August 2019 |
| | | JP 2019-163476 A | 26 September 2019 |
| | | JP 2020-055811 A | 09 April 2020 |
| | | JP 2020-090678 A | 11 June 2020 |
| | | JP 2020-143296 A | 10 September 2020 |
| | | JP 2021-036050 A | 04 March 2021 |
| | | JP 2021-073360 A | 13 May 2021 |
| | | JP 2021-073361 A | 13 May 2021 |

Form PCT/ISA/210 (patent family annex) (July 2019)

**INTERNATIONAL SEARCH REPORT**
**Information on patent family members**

International application No.
**PCT/KR2021/018086**

| Patent document cited in search report | Publication date (day/month/year) | Patent family member(s) | Publication date (day/month/year) |
|---|---|---|---|
| | | JP 2021-073362 A | 13 May 2021 |
| | | JP 2021-102776 A | 15 July 2021 |
| | | JP 2021-185225 A | 09 December 2021 |
| | | JP 6526030 B2 | 05 June 2019 |
| | | JP 6527165 B2 | 05 June 2019 |
| | | JP 6532881 B2 | 19 June 2019 |
| | | JP 6538703 B2 | 03 July 2019 |
| | | JP 6613240 B2 | 27 November 2019 |
| | | KR 10-2016-0121540 A | 19 October 2016 |
| | | KR 10-2016-0121543 A | 19 October 2016 |
| | | KR 10-2021-0129251 A | 27 October 2021 |
| | | KR 10-2021-0135629 A | 15 November 2021 |
| | | KR 10-2021-0137229 A | 17 November 2021 |
| | | KR 10-2021-0158429 A | 30 December 2021 |
| | | KR 10-2022-0000908 A | 04 January 2022 |
| | | KR 10-2293490 B1 | 26 August 2021 |
| | | KR 10-2321784 B1 | 05 November 2021 |
| | | KR 10-2323279 B1 | 08 November 2021 |
| | | KR 10-2324441 B1 | 11 November 2021 |
| | | KR 10-2329464 B1 | 23 November 2021 |
| | | KR 10-2329477 B1 | 24 November 2021 |
| | | KR 10-2344094 B1 | 30 December 2021 |
| | | KR 10-2354757 B1 | 08 February 2022 |
| | | KR 10-2362120 B1 | 14 February 2022 |
| | | KR 10-2362123 B1 | 14 February 2022 |
| | | US 9809667 B2 | 07 November 2017 |
| | | US 9850332 B2 | 26 December 2017 |
| | | US 9879106 B2 | 30 January 2018 |
| | | US 9902790 B2 | 27 February 2018 |

Form PCT/ISA/210 (patent family annex) (July 2019)